# EUROPEAN PATENT SPECIFICATION

(11) **EP 2 486 803 B1**
(45) Date of publication and mention of the grant of the patent: **11.09.2013**
(21) Application number: 12155138.6
(22) Date of filing: 13.02.2012
(51) Int. Cl.: A23J 1/20, A23J 3/08, A23C 1/00, A23C 13/14, A21D 13/00

(54) **Liquid, heat gellable food**
Flüssiges, durch Wärme gelierbares Nahrungsmittel
Aliments gélifiés chauds et liquides

(30) Priority: 11.02.2011 NL 2006182
(43) Date of publication of application: 15.08.2012
(73) Proprietor: Friesland Brands B.V., 3818 LE Amersfoort (NL)
(72) Inventor: Heuvelman, Lambertus, 7462 DR Rijssen (NL)
(74) Representative: Jansen, Cornelis Marinus

(56) References cited:
- EP-A1- 2 250 906
- WO-A1-2010/120199
- WO-A2-2006/119064
- US-A- 5 217 741
- US-A1- 2002 164 401
- US-B2- 6 495 194

## Description

This invention relates to a liquid, heat gellable food, to a method for the preparation of this food, and to the use thereof in pastry, desserts, and the like.

In the food industry, products exist that are constituted from separate components which are heated together during the preparation, such as, for example, some sorts of Dutch pie ("vlaai"). During the preparation of such products, a pastry base or dough is filled in a form, followed by the addition of a pie filling. The pastry base and the filling are then baked together. On an industrial scale, such products are often prepared in a continuous process, where the filling is dosed in-line in or on the unbaked pastry base. Subsequently, these products go continuously through an oven where they are baked, whereupon they are ready to be processed further.

The above mentioned pie filling should meet several requirements. First, the viscosity during the application to a pastry base may not be high, so that the product easily flows and spreads out by itself. At the same time, the product should preferably be shelf-stable, which often means UHT treated or similar. The product should, therefore, stay liquid and not gel at a (first) UHT treatment.

Second, during the end use, such as baking in the oven, the product should obtain a firm, gelled structure directly after leaving the oven, and preferably, already during heating. The gelled structure should be firm enough so that the product can be directly processed further, also stay firm upon cooling. If the structure is too soft or too thin after baking, the pie filling will run out of the form during further processing, which is undesired.

For this application many products seem to be available on the market, however, none of them combines both characteristics. Different bakery creams are known, for example, ready-to-use crème pâtissière (pastry cream) and crème patissières that are reconstituted from powder just before the application. These products are meant as a filling/topping for pastry and should have a firm structure during application. When such products are applied to a pastry base, they do not spread out easily due to the high viscosity and, thus, should be additionally spread, for example, by using a spatula, which is undesired during continuous production. During the baking stage, on the contrary, the structure of such pastry creams will become too thin and run. For example, products based on gelling thickening agents such as polysaccharides, become liquid at the melting temperature of these agents, while the gelling will only take place at cooling to the setting temperature of the gelling agent used, which often lies around 35°C for polysaccharides.

EP 1 287 748 B1 describes a pastry filling, based on a starch and cellulose derivatives and a heat-reversible hydrocolloid. This liquid filling obtains a firm structure after baking upon cooling. Due to the use of gelling polysaccharides, this product would be too viscous when applied to a pastry base and, thus, it would not automatically spread. In addition, the gelled structure obtained upon heating would be not firm enough immediately after the heat treatment, which makes it not suitable for continuous processing.

It is an aim of the present invention to provide a liquid, heat gellable food such as a pastry filling, which gels during the intended use such as baking to the desired firm structure, which firm structure is retained after cooling.

In order to better address the foregoing desires, the invention, in one aspect, resides in using a product based on whey protein.

Heat treatment of whey protein is known in the literature. Generally, it relates to a heat treatment where the protein denaturizes and forms aggregates. When the aggregates become larger, usually a homogenization treatment is applied to obtain the desired particle size. This type of heat-treated protein will not gel again during a second heat treatment and is only suitable to be used as a filler, for example, to amplify creamy taste.

US 6,548,098 describes a food composition for making a pudding, containing whey protein, milk, egg, cream and sugar, which gels after heating. To prevent gelling of the whey protein during sterilization of the ingredients, the whey protein is separately heat-treated at a low pH. When the food composition is heated in the oven, a pudding is obtained which gels upon cooling in a refrigerator. One disadvantage of this composition is that it contains an acidic phase, which influences the organoleptic properties of the food product and limits its applications, for example, in sweet pastry products. Moreover, the gelling of the product happens in a refrigerator upon cooling and not immediately after the leaving the oven, therefore, making it unsuitable for continuous processing.

US 6,495,194 B2 describes a process for preparing a composition comprising partially heat-denatured whey protein and casein protein. The process involves heating a solution of non-denatured whey protein at 55°C to 120°C to obtain an aqueous solution of partially heat-denatured whey protein.

WO 2006/119064 A2 describes a method of making an aseptic food product, wherein a dispersion of proteins is heated to a denaturation temperature and further the denatured mixture is pumped through a homogenizer.

Surprisingly, it has now been found that it is possible to heat whey protein at a neutral pH and at temperatures higher than 110°C, thereby obtaining a denatured, non-coagulated whey protein, the gelling ability of which is preserved. The drawbacks of the heating of a whey protein at a low pH as mentioned above, are thereby totally obviated.

Accordingly, the subject of the present invention, in one aspect, is a liquid, heat gellable food, suitable as a pie filling, comprising a denatured, non-coagulated whey protein, wherein the particle size D50 of the denatured non-coagulated whey protein is below 0.8 micron.

In another aspect, the invention relates to a food with a gelled structure, obtainable by a heat treatment of the liquid, heat gellable food of the invention.

The invention further relates to a method of preparing a liquid, heat gellable food, which method comprises the steps of:
(i) providing a denatured, non-coagulated whey protein,
(ii) providing an edible base, and optionally sterilizing of the base,
   and
(iii) combining the whey protein and the edible base to obtain a liquid, heat gellable food.

The invention, in another aspect, relates to a pie, a cake, or another pastry or dessert product, comprising the liquid, heat gellable food of the invention, or a heated product thereof, or a product obtainable by the method of the invention.

The invention, in yet another aspect, provides a method to bake a pie, a cake or another pastry product, wherein the liquid, heat gellable food of the invention is applied to an unbaked pastry base and wherein the food and the pastry base are then baked together.

Finally, the invention relates to the use of a denatured, non-coagulated whey protein and the liquid, heat gellable food of the invention in baking of pies, cakes and other pastry products.

Where it says "non-coagulated" this does not preclude an insubstantial coagulation to have occurred, e.g. up to 5 wt.% of the whey protein could be characterized as coagulated, preferably up to 1 wt.%, and more preferably up to 5‰ by weight. The non-coagulated whey protein is particularly characterized with reference to particle sizes. Particle sizes of non heat-treated whey protein are generally 1 to 3 nm (monomers and dimers). Particles could comprise some degree of aggregation, but this will generally not be at a level above overall (aggregate) particle sizes of 1 micron. Preferably, the denatured, non-coagulated whey protein has overall particle sizes below 0.8 micron, more preferably below 0.6 micron, still more preferably below 0.5 micron, and most preferably below 0.4 micron. The particle size can be determined by light-scattering methods well-known in the art. A solution of the denatured, non-coagulated whey protein in water, particularly in the concentrations generally used according to the invention, will be transparent (i.e. visible light will pass through it). A solution that is non-transparent is considered to comprise coagulated whey protein.

The denatured, non-coagulated whey protein is preferably obtainable by subjecting a whey protein to a denaturing heat treatment at a nearly neutral pH, that is, pH 6-8 and, most preferably actually so obtained. The denaturing can also be effectuated in other manners, such as pressure-induced denaturing (ref. Rademacher et al., Reaction kinetics of ultra-high pressure treatment of milk, in Advances in High Pressure and Biotechnology, Berlin: Springer 1999, S. 449 - 452). E.g., at 700 MPa a denaturation of whey protein of 50% is obtained in 20 minutes.

Preferably, the denatured whey protein is obtained by heating a whey protein solution to a temperature higher than the heat-denaturing temperature of the whey protein, e.g. 55°C or higher. Preferably, the heating is conducted at a higher temperature, e.g. 100°C to 150°C, preferably 110°C to 145°C, with a holding time 0.5-60 sec. More preferably the heating is conducted at a temperature between 120 to 140°C with a holding time 4-20 sec. The person skilled in the art is well aware that the duration of the denaturing heating will generally be adaptable to the temperature, i.e. the higher the temperature, the shorter the duration. To obtain a product with a long shelf-life, the heating should be preferably conducted at temperatures above 110°C. Typically, the preferred temperature/time combinations are: 4-8 seconds at 128°C, 4 seconds at 140°C. After heating, the whey protein solution is cooled down to a temperature under 25°C, for example, to 20°C.

It will be understood that the term "denatured" does not imply that all of the whey protein is necessarily denatured, as the presence of non-denatured whey protein in addition to the denatured, non-coagulated whey protein does not substantially affect the gelling properties. Preferably, at least 50 wt.% of all whey protein used is denatured, non-coagulated whey protein, more preferably at least 75 wt.%, and most preferably 80-95 wt.%. The degree of protein denaturation can be determined by techniques known in the art. Such techniques are, for example, fast protein liquid chromatography, electrophoresis, gel permeation chromatography, fluorescence spectrophotometry.

The whey protein used in the invention can be of various sources. Preferably, undenatured whey protein powder is used, for example, whey protein powder with 35% whey protein obtained by ultrafiltration of a cheese whey. Other whey protein preparations are also suitable, for example, whey protein concentrate (WPC) and whey protein isolate (WPI). Particularly preferred are whey protein preparations that are additionally demineralized. Such demineralization can be of a low extent, e. g. up to 20% (notably if the original mineral content is already low), and preferably is done up to 40% demineralization, preferably up to 60% demineralization, and more preferably up to 80% demineralization or above, preferably as high as practically possible. The result of the demineralization is preferably a demineralized whey protein preparation having a so-called "ash" content of below 6 % by weight (based on dry matter), preferably below 4%, more preferably below 2% and most preferably below 1%, all of these percentages being by weight and on the basis of dry matter. It is further preferred to employ a WPC preparation having a low content of bivalent cations, particularly a low content of calcium and magnesium. This refers to a content of below 2500 ppm, preferably below 1000 ppm, more preferably below 750 ppm, and most preferably below 500 ppm (all ppm's being on the basis of dry WPC weight).

A suitable whey protein solution is prepared, for example, by dissolving a whey protein powder in water. Preferably, the solution comprises between 2 and 15 wt.%, more preferably, between 4 and 12 wt.% of whey protein. Lower concentrations of the whey protein, such as less than 2 wt. %, would not provide for a sufficient gelling during a second heat treatment. If higher concentrations are used, other technical measures can be taken to avoid coagulation, but this is generally more complicated, hence less desired, than staying within the aforementioned concentration range. The aqueous whey protein solution is then subjected to a denaturing heat treatment.

The heating is preferably conducted at a pH set to a neutral value, for example, to a value between 6 and 8. A higher pH, whilst technically feasible, is not desired in view of the resulting taste characteristics of the whey protein. For optimal taste characteristics (i.e. the avoidance of a bad taste), the pH is preferably not higher than 7.25. Most preferably, a pH of 6.5 to 7.5 is employed.

To obtain the liquid, heat gellable food according to the invention a heat-treated whey protein solution comprising denatured, non-coagulated whey protein is mixed with an edible base.

The edible base preferably includes all desired ingredients of the end product, for example, for crème pâtissière these are typically milk, sugar or sugar substitutes, modified starch, gelling hydrocolloid, taste and flavour ingredients, coloring agents, etc. Other compositions for the edible base are conceivable as well, depending on the type of end product. For example, for non-dairy products such as fruit-pies, the edible base will typically be a fruit purée or fruit compôte, or another generally aqueous-based liquid composition comprising fruit and sugars. It is preferred that the edible base comprises a gelling hydrocolloid (e.g. a gelling polysaccharide such as gellan gom, agar agar, carrageen, etc.). This contributes to retaining a gelled structure, capable of being cut, after cooling, in addition to the advantageous gelling properties upon heating (baking) provided for by the denatured, non-coagulated whey protein.

The edible base can be based on milk or milk-derived products such as solutions of milk powder and solutions derived from milk, where, for example, certain milk components are removed or, on the contrary, increased in concentration. The fat content of the milk can lie, for example, between 0 and 20%. If skimmed milk is used, the fat content can be set with vegetable oils, such as (hard) coconut-oil, etc.

The edible base is typically prepared by mixing all the ingredients with a liquid component, such as milk. The edible base can also be obtained by mixing the desired ingredients in a powder form with water. This mixture can optionally be sterilized, normally by UHT treatment. Depending on the application, the edible base can have different physical properties, such as viscosity. For preparing a pie filling, the consistency of the edible base can range from a pourable fluid to a thick flowing paste. When the edible base is sterilized it may get thick or even gel. However, after the addition of the heat-treated whey protein solution, the resulting liquid food product will have a desired pourable consistency.

The edible base can also contain starch. Preferably, modified starch is used, more preferably, the starch having modification H or modification R (food additive codes E 1422 and E 1442, respectively), or a combination of different modifications. Further, starches resistant to high shear and high temperatures are suitable.

The edible base can further include fat, saccharose, other sugars, sugar substitutes, sweeteners, etc.

Preferably, the edible base contains one or more gelling polysaccharides such as carrageen, gellan gum, agar agar, and also gel forming combinations of polysaccharides, e.g. locust bean gum and xanthan gum. Less desired but also suitable are chemically gelling polysaccharides such as alginate and LM-pectin.

Other generally used ingredients known to a skilled person can also be included in the edible base, such as salts, emulsifiers, coloring agents, flavors, etc. The edible base can also comprise parts or pieces of other foodstuffs, such as fruit, vegetables, spices, meat, etc.

The heat-treated whey protein solution comprising denatured, non-coagulated whey protein is mixed in a desired proportion with the edible base, while stirring. The proportion is usually chosen such as to achieve a desired (pourable) consistency of the resulting liquid product and at the same time to provide for a desired degree of gelling after the heating of the resulting product. Preferably, the whey protein solution is added in such an amount that the whey protein concentration in the liquid, heat gellable food is 0.5-6 wt.%, more preferably, 1-3 wt.%. Less than 0.5 wt.% is not desired due to an insufficient gelling, while higher concentrations are usually less desired in pie fillings. However, for use in other heat gellable products, higher concentrations are also possible.

The edible base and the whey protein solution are then mixed in a usual way, known to a skilled person. Normally the mixture is stirred until it becomes homogeneous. For example, the edible base can be stored in a tank and stirred while the whey protein solution is added to it. Also a continuous flow of the edible base can be applied, whereto a whey protein solution is continuously added in-line in a desired amount, for example, by using a static mixer wherein two flows are mixed. The mixing is preferably done under aseptic conditions.

Preferably, the liquid product as delivered to the customer should have a long shelf-life, both at cooling conditions and without cooling. The terms "long shelf-life", as well as "shelf-stable", generally refer to a stable storage for at least 6 months and preferably 12 months and longer. The liquid food of the invention preferably is stable for 6 months and longer at 20°C and more preferably 12 months and longer at 30°C. The preferred minimum storage life of the liquid food of the invention is 2 weeks at 5°C.

The preferred shelf stability is obtained by separately pasteurizing or sterilizing the edible base, and mixing and packaging this with the above-mentioned pre-heated whey protein under aseptic conditions. The temperature and duration of these treatments depend on the type of edible base, and on the desired shelf-life and storage temperature. The appropriate conditions are known to the skilled person, and do not require elucidation here.

The liquid, heat gellable food of the invention is characterized by the storage modulus G' and tan δ, the latter being the ratio of the loss modulus G" to the storage modulus G'. The food of the invention is characterized by a low G'. For a liquid pie filling G' should be less than 500 Pa, preferably, less than 300 Pa, typically, in the range of 30-200 Pa, as measured at 20°C, and tan δ should be more than 0.20 and, preferably, more than 0.30. The storage modulus G' and the ratio tan δ can be determined by well-known methods in the art. Typically, the storage modulus G' of the product is measured during heating and cooling using a rheometer. For this, the product is placed in a rheometer measuring cell. A parallel plate with a diameter of 50 mm is used. Typically, the storage modulus is continuously measured during a heat treatment at a strain of 0.1% and a frequency of 1Hz.

When the liquid, heat gellable food of the invention is subjected to a second heat treatment in the end application, it gels during the heating, thereby obtaining a stable firm structure which remains firm after cooling down. Firm means here, for example, that directly after a heat treatment at 95°C for 5 min and cooling down to 70°C, the gelled food has a storage modulus G' higher than 300 Pa, preferably, higher than 500 Pa and typically in the range of 600-1000 Pa. When the food of the invention is heated at 95°C for 5 min, cooled down to 20°C and held for 2 min at 20°C, the storage modulus G' is higher than 1000 Pa, preferably, higher than 2000 Pa and is typically in the range of 3000-10000 Pa, as measured at 20°C.

When the liquid, heat gellable food of the invention is a pie filling, a second heat treatment usually means baking in the oven. The baking conditions such as the temperature and the duration time, can be found in cook books and are well known to those skilled in the art. In general, the baking temperature and the time are dependent on the size and type of the product to be baked. Typically, oven temperatures between 160 and 200°C are used in combination with duration times between 10 and 70 min, for example, 35 min at 170°C. At the same time, the temperature of the filling can lie below these temperatures. When the temperature of the filling is about 90°C and higher, the filling gels.

The liquid, heat gellable food according to the invention has preferably a neutral pH, that is, between 6 and 8 and, preferably, between 6.5 and 7.5. Preferably, the pH of the liquid, heat gellable food is not lower than 6 for several reasons. First, the presence of phosphoric acid, a generally used acid ingredient, is not appreciated by consumers nowadays. Second, precautions should be taken when mixing acidic ingredients with pH neutral components of the edible base, such as milk wherein local curdling can occur. Furthermore, if the low pH of the food composition has to be further neutralized with a base, the end product would contain too much salt and, therefore, be less suitable for sweet applications. It will be understood that the neutral pH under which, according to the invention, a whey protein can be treated so as to be capable of providing the desired gelling properties, constitutes a considerable advantage in respect of the foregoing preferred embodiment of a pH neutral liquid, heat gellable food.

The liquid food according to the invention is particularly suitable for sweet applications, such as cakes, pies, pastry. However, other applications, such as salty and/or spicy products, are possible as well.

The present invention also relates to the use of denatured, non-coagulated whey protein as a means to gel a pie filling during heating.

The whey protein solution comprising denatured, non-coagulated whey protein can also be used in combination with ready-to-use products, for example, with commercially available powder mixes for a pie filling. When added to such a mix, the whey protein solution as described in the present invention will provide for heat gelling properties of the pie filling. In general, any recipe of a pie, cake or another bake or dessert product can be modified by the addition of the whey protein solution as described in the present invention, so that the pie filling or the dessert becomes heat gellable. For that, the liquid components according to the recipe can be (partially) replaced by an aqueous solution of a denatured, non-coagulated whey protein.

The gelled product according to the invention is suitable as a pie filling in baking of pies, cakes and other pastry products. In general, the liquid food according to the invention is applied on or in a suitable starting product, e.g. a (partly) unbaked cake or pastry base, or other form of pastry which is still to undergo a final baking step. However, it is also possible to use the liquid food itself as a starting product, that is, without first applying to a pastry base. Typical examples of this application are crème brulée and cooking cream (Dutch "koksroom"), the latter being usually thickened by heating and used as a basis for sauces.

The invention will hereinafter be further illustrated with reference to the following, non-limiting examples and figures. In these examples, the parts and percentages are by weight unless stated otherwise.

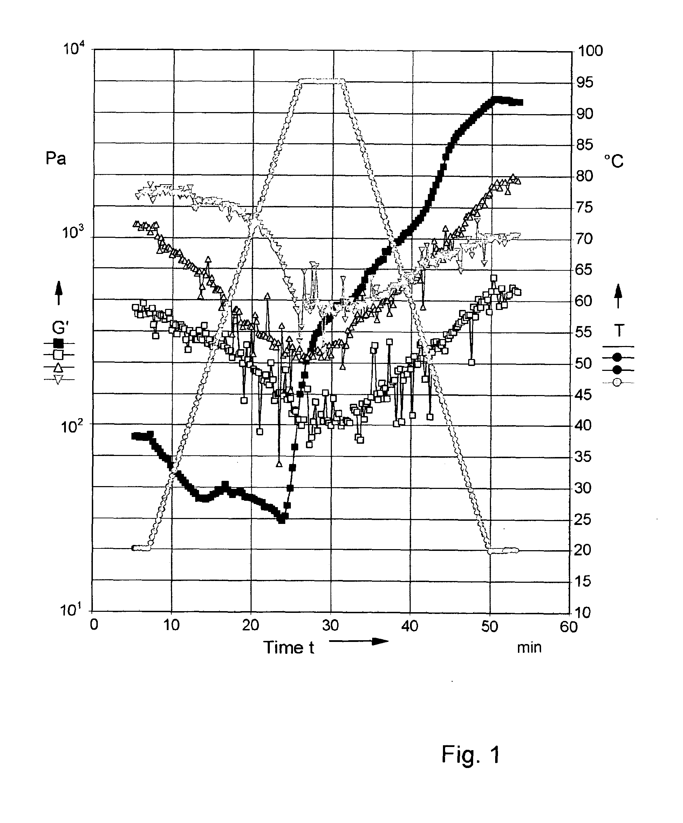

Figure 1 shows the rheometer curves (G'/temperature and time) of several crème pâtissière available on the market as well as of the product of the invention. Closed circles represent the temperature profile. Closed squares represent crème pâtissière with added whey protein, the product of the invention; open squares represent a UHT-treated crème pâtissière (1), available on the market; open triangles represent a UHT-treated crème pâtissière (2), available on the market; closed triangles represent an existing instant powder product available on the market, after preparation (mixing with water).

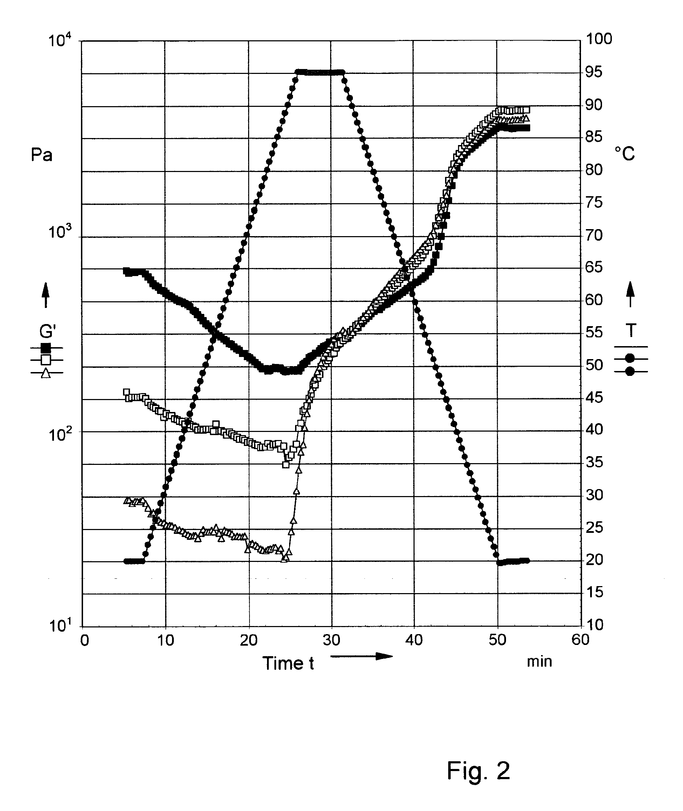

Figure 2 shows the rheometer curves (G'/temperature and time) of crème pâtissière without whey protein and of crème pâtissière according to the invention with 12.5% and 25% of the whey protein solution. Closed circles represent the temperature profile. Closed squares represent a crème pâtissière (CP) base without whey protein, open squares represent a product containing 87.5% CP base and 12.5% heat-treated whey protein solution (with 8% whey protein); open triangles represent a product containing 75% CP base and 25% heat-treated whey protein solution (with 8% whey protein).

### Example 1.

A pastry filling for use as liquid crème pâtissière (CP) was prepared as follows.

Whey protein solution:

| | |
|---|---|
| Hiprotal 35BL* | 22.8% |
| Water | 77.2% |

| | |
|---|---|
| * Hiprotal 35BL is a whey protein powder (WPC) with 35% whey protein produced by Friesland Foods DOMO. | |

Whey protein powder was dissolved in water at 45°C. The solution was then cooled down and stored cool for 24h. Further, the pH of the solution was set to 7.25 with a base and the solution was heated for 4 sec at 140°C using Sterilab. The solution was hereafter cooled down to 20°C.

The whey protein solution used in the invention was analyzed before and after the heat treatment to determine the particle size of the particles present in the solution, using a Malvern particle analyzer.

Results:
Particle size (D50) of the particles in the whey protein solution:

| | |
|---|---|
| Before heating | 0.20 micron |
| After heating | 0.17 micron |

From the measurements, it follows that the particle size was not increased during the heating and remains under 1.0 micron. A slight reduction of the particle size was possibly caused by the dissolution of low soluble powder particles during the heating.

The edible base of crème pâtissière (CP base) was prepared as follows:

| Ingredients: | |
|---|---|
| Skimmed milk | 75.8% |
| Sugar | 14% |
| Coconut-oil | 4% |
| Modified starch | 6% |
| Gellan gum | 0.15% |
| Flavors and aroma | 0.05% |

The ingredients were mixed and then added to skimmed milk while stirred, and subsequently emulsified. The resulting mixture was heated using Sterilab for 4 sec at 140°C, then cooled down to 20°C and stored in a stirring tank. To 75% of this CP base 25% of the heat-treated whey protein solution was added under stirring. After 15 min of stirring, the mixed product was filled.

The gelling capabilities of the crème pâtissière were analyzed by measuring the storage modulus G' of the product during heating and cooling using a rheometer. For this, the crème pâtissière was placed in the rheometer measuring cell at 20°C. The storage modulus was measured at a strain of 0.1% and a frequency of 1Hz. Then, the temperature was changed according to the following heat treatment scheme: 2 min at 20°C, heating from 20 to 95°C with a speed 4°C/min, 5 min at 95°C, cooling down to 20°C with 4°C/min and finally 2 min at 20°C. G' was continuously determined during the whole heat treatment.

Figure 1 shows the rheometer curves of crème pâtissière according to the invention (Example 1) and of three products available on the market.

These curves show that due to the addition of the whey protein solution, the storage modulus G' of the product of the invention was low before the heating. During the heating step, strong gelling took place. During the cooling down, the G' of the product was also higher than that of the other products.

The CP base was also tested in the preparation of pies. The structure of the crème pâtissière containing the heat-treated whey protein was very thin before baking, and spread out by itself in a smooth way. After the baking step, directly out of the oven, the structure of the crème pâtissière containing the heat-treated whey protein was firm.

This example demonstrates the advantageous effect of the heat-treated whey protein addition on the structure of crème pâtissière, both before and after the baking step.

### Example 2. Effect of dosage

A CP base and a heat-treated whey protein solution were prepared according to Example 1.

The heat-treated whey protein solution was aseptically added in two proportions to the CP base, according to the following Table.

| | CP base | Dosage 12.5% | Dosage 25% |
|---|---|---|---|
| CP base | 100% | 87.5% | 75% |
| heat-treated whey protein solution (8% whey protein) | - | 12.5% | 25% |

Figure 2 shows the rheometer curves (G' against the temperature T and time t) for the three products. From these curves it is clear that the heat-treated whey protein solution makes the structure of the product softer and thinner before the heating. The extent of this effect depends on the dosage. Both dosages of the whey protein exhibit gelling of the whey protein at 95°C. The structure change caused by the whey protein, is preserved, both at a high temperature and also after cooling down.

These three products were tested in pies, wherein the crème pâtissière according to the invention was baked together with a pastry base.

Results:
only CP base: the structure is firm and needs to be spread out with a spatula; directly after baking the structure is still liquid, 15 min later the structure is gelled enough
CP base + 12.5%: the structure is somewhat liquid and needs some spreading with a spatula; directly after baking it becomes firm relatively fast
CP base + 25%: liquid, spreads out automatically and smoothly; after baking the structure becomes firm quickly

The baking tests show that the dosage of the whey protein solution influences the structure of the liquid food of the invention, and that a desired structure can be obtained by adjusting the dosage. A clear improvement of the structure can already be seen when a CP base with 12.5% heat-treated whey protein solution (with 8% whey protein) is used.

## Claims

1. A liquid, heat gellable food, comprising a denatured, non-coagulated whey protein, wherein the particle size D50 of the denatured, non-coagulated whey protein is below 0.8 micron.

2. The food according to claim 1, comprising 0.5-6 wt.% of the whey protein.

3. The food according to claim 1 or 2, comprising further one or more ingredients selected from milk, a milk-derived product, starch, fat, sugar and a gelling polysaccharide.

4. A food with a gelled structure, obtainable by a heat treatment of the food of any one of claims 1-3.

5. Method for preparing a liquid, heat gellable food, comprising the steps of:
i) providing a denatured, non-coagulated whey protein,
ii) providing an edible base, and optionally sterilizing of the base, and
iii) combining the whey protein and the edible base to obtain a liquid, heat gellable food.

6. Method according to claim 5, wherein the denatured, non-coagulated whey protein is obtained by subjecting a whey protein to a denaturing heat treatment at pH 6-8, comprising heating at a temperature between 100 and 150°C with a holding time 0.5-60 sec.

7. Method according to claim 6, wherein the heat treatment comprises heating at a temperature between 120 and 140°C with a holding time 4-20 sec.

8. Method according to claim 6 or 7, wherein the heat treatment is carried out on an aqueous solution comprising 2-15 wt.% whey protein.

9. Method according to any one of claims 5-8, wherein the concentration of the whey protein in the liquid, heat gellable food is 0.5-6 wt.%.

10. Method according to any one of claims 5-9, wherein the edible base comprises one or more ingredients selected from milk, a milk-derived product, starch, fat, sugar and a gelling polysaccharide.

11. A pie, a cake or another pastry or dessert product, comprising the food according to any one of claims 1-4 or obtainable according to the method of any one of claims 5-10.

12. Method to bake a pie, a cake or another pastry product, wherein the food according to any one of claims 1-3 or obtainable according to any one of the claims 5-10 is applied to an unbaked pastry base and wherein the food and the pastry base are then baked together.

13. Use of a denatured, non-coagulated whey protein in baking of pies, cakes and other pastry products, as a means to gel a pie filling during heating.

14. Use of the food of any one of claims 1-4 or obtainable according to the method of any one of claims 5-10, as a pie filling in baking of pies, cakes and other pastry products.

## Patentansprüche

1. Flüssiges, wärmegelierbares Nahrungsmittel, umfassend ein denaturiertes, nicht koaguliertes Molkeprotein, wobei die Teilchengröße D50 des denaturierten, nicht koagulierten Molkeproteins unter 0,8 Mikron liegt.

2. Nahrungsmittel nach Anspruch 1, umfassend 0,5-6 Gew.-% des Molkeproteins.

3. Nahrungsmittel nach Anspruch 1 oder 2, umfassend ferner eine oder mehrere Zutaten, ausgewählt aus Milch, einem Milchderivatprodukt, Stärke, Fett, Zucker und einem gelierenden Polysaccharid.

4. Nahrungsmittel mit einer gelierten Struktur, erhältlich durch Wärmebehandlung des Nahrungsmittels nach einem der Ansprüche 1-3.

5. Verfahren zur Herstellung eines flüssigen, wärmegelierbaren Nahrungsmittels, umfassend folgende Schritte:
i) Bereitstellen eines denaturierten, nicht koagulierten Molkeproteins,
ii) Bereitstellen einer essbaren Basis und optional Sterilisieren der Basis, und
iii) Kombinieren des Molkeproteins und der essbaren Basis, um ein flüssiges, wärmegelierbares Nahrungsmittel zu erhalten.

6. Verfahren nach Anspruch 5, wobei das denaturierte, nicht koagulierte Molkeprotein erhältlich ist, indem ein Molkeprotein einer denaturierenden Wärmebehandlung bei pH 6-8 ausgesetzt wird, umfassend das Erwärmen bei einer Temperatur zwischen 100 und 150°C mit einer Haltezeit von 0,5-60 Sekunden.

7. Verfahren nach Anspruch 6, wobei die Wärmebehandlung das Erwärmen bei einer Temperatur zwischen 120 und 140°C umfasst, mit einer Haltezeit von 4-20 Sekunden.

8. Verfahren nach Anspruch 6 oder 7, wobei die Wärmebehandlung an einer wässrigen Lösung, umfassend 2-15 Gew.-% Molkeprotein, ausgeführt wird.

9. Verfahren nach einem der Ansprüche 5-8, wobei die Konzentration des Molkeproteins in dem flüssigen, wärmegelierbaren Nahrungsmittel 0,5-6 Gew.-% beträgt.

10. Verfahren nach einem der Ansprüche 5-9, wobei die essbare Basis eine oder mehrere Zutaten enthält, ausgewählt aus Milch, einem Milchderivatprodukt, Stärke, Fett, Zucker und einem gelierenden Polysaccharid.

11. Kuchen, Torte oder ein anderes Gebäck- oder Nachspeisenprodukt, umfassend das Nahrungsmittel nach einem der Ansprüche 1-4 oder erhältlich gemäß dem Verfahren nach einem der Ansprüche 5-10.

12. Verfahren zum Backen eines Kuchens, einer Torte oder eines anderen Gebäckprodukts, wobei das Nahrungsmittel nach einem der Ansprüche 1-3 oder erhältlich nach einem der Ansprüche 5-10 auf eine nicht gebackene Gebäckbasis angewendet wird und wobei das Nahrungsmittel und die Gebäckbasis anschließend zusammen gebacken werden.

13. Verwendung eines denaturierten, nicht koagulierten Molkeproteins zum Backen von Kuchen, Torten und anderen Gebäckprodukten als ein Mittel, um eine Kuchenfüllung während des Erwärmens zu gelieren.

14. Verwendung des Nahrungsmittels nach einem der Ansprüche 1-4 oder erhältlich gemäß dem Verfahren nach einem der Ansprüche 5-10 als Kuchenfüllung beim Backen von Kuchen, Torten und anderen Gebäckprodukten.

## Revendications

1. Aliment liquide pouvant gélifier à la chaleur, comprenant une protéine de lactosérum dénaturée non coagulée, dans lequel la granulométrie D50 de la protéine de lactosérum dénaturée non coagulée est inférieure à 0,8 micron.

2. Aliment selon la revendication 1, comprenant de 0,5 à 6 % en poids de la protéine de lactosérum.

3. Aliment selon la revendication 1 ou 2, comprenant en outre un ou plusieurs ingrédients choisis parmi le lait, un produit dérivé du lait, l'amidon, les matières grasses, le sucre et un polysaccharide gélifiant.

4. Aliment présentant une structure gélifiée, pouvant être obtenu par un traitement thermique de l'aliment selon l'une quelconque des revendications 1 à 3.

5. Procédé de préparation d'un aliment liquide pouvant gélifier à la chaleur, comprenant les étapes consistant à :
i) fournir une protéine de lactosérum dénaturée non coagulée,
ii) fournir une base comestible, et facultativement stériliser la base, et
iii) combiner la protéine de lactosérum à la base comestible pour obtenir un aliment liquide pouvant gélifier à la chaleur.

6. Procédé selon la revendication 5, dans lequel la protéine de lactosérum dénaturée non coagulée est obtenue en soumettant une protéine de lactosérum à un traitement thermique dénaturant à un pH de 6 à 8, comprenant un chauffage à une température comprise entre 100 et 150 °C avec un temps de maintien de 0,5 à 60 sec.

7. Procédé selon la revendication 6, dans lequel le traitement thermique comprend un chauffage à une température comprise entre 120 et 140 °C avec un temps de maintien de 4 à 20 sec.

8. Procédé selon la revendication 6 ou 7, dans lequel le traitement thermique est effectué sur une solution aqueuse comprenant de 2 à 15 % en poids de protéine de lactosérum.

9. Procédé selon l'une quelconque des revendications 5 à 8, dans lequel la concentration de la protéine de lactosérum dans l'aliment liquide pouvant gélifier à la chaleur est de 0,5 à 6 % en poids.

10. Procédé selon l'une quelconque des revendications 5 à 9, dans lequel la base comestible comprend un ou plusieurs ingrédients choisis parmi le lait, un produit dérivé du lait, l'amidon, les matières grasses, le sucre et un polysaccharide gélifiant.

11. Tarte, gâteau ou autre produit de pâtisserie ou de dessert, comprenant l'aliment selon l'une quelconque des revendications 1 à 4 ou pouvant être obtenu selon le procédé de l'une quelconque des revendications 5 à 10.

12. Procédé de cuisson d'une tarte, d'un gâteau ou d'un autre produit de pâtisserie, dans lequel l'aliment selon l'une quelconque des revendications 1 à 3 ou pouvant être obtenu selon l'une quelconque des revendications 5 à 10 est appliqué à une base de pâtisserie non cuite et dans lequel l'aliment et la base de pâtisserie sont, ensuite, cuits ensemble.

13. Utilisation d'une protéine de lactosérum dénaturée non coagulée dans la cuisson de tartes, gâteaux et autres produits de pâtisserie, comme moyen pour gélifier une garniture de tarte durant le chauffage.

14. Utilisation de l'aliment selon l'une quelconque des revendications 1 à 4 ou pouvant être obtenu selon le procédé de l'une quelconque des revendications 5 à 10, comme garniture de tarte dans la cuisson de tartes, gâteaux et autres produits de pâtisserie.
